# EUROPEAN PATENT APPLICATION

(11) **EP 4 517 135 A1**
(43) Date of publication of application: **05.03.2025**
(21) Application number: 23794869.0
(22) Date of filing: 21.03.2023
(51) Int. Cl.: F16H 57/04

(54) **LUBRICATING MECHANISM FOR PLANETARY GEAR TRAIN**

(30) Priority: 24.04.2022 CN 202210458645
(71) Applicant: ZF Wind Power (Tianjin) Co., Ltd., Tianjin 300402 (CN); ZF Wind Power Antwerpen NV, 3920 Lommel (BE)
(72) Inventor: ZHOU, Dan, Tianjin 300402 (CN); NIU, Guowei, Tianjin 300402 (CN)
(74) Representative: ZF Friedrichshafen AG
(86) International application number: PCT/CN2023/082840
(87) International publication number: WO 2023/207434

(57) **Abstract**

The present invention relates to a backing plate for a brake pad of a disc brake, wherein the backing plate has a first side (10) and a second side (12) opposite and parallel to the first side (10). The first side (10) is configured for mounting to a caliper of the vehicle disc brake. The second side (10) is configured for fixation of a brake lining of the brake pad. The backing plate has a protrusion (20) extending away from the first side (10). The protrusion (20) forms a third side (22) of the backing plate and a fourth side (24) of the backing plate opposite the third side (22). The third side (22) is configured for resting against the caliper of the vehicle disc brake. The fourth side (24) is angled towards the third side (22) in a direction away from the first side (10). The invention further relates to a brake pad and a disc brake.

## Description

### Technical Field

The present invention relates to a backing plate for a brake pad of a disc brake. The present invention also relates to a brake pad for a disc brake and to a disc brake for a vehicle.

### Prior Art

Brake pads for disc brakes usually have a backing plate with a brake lining fixed thereon. The brake pad is mounted on a caliper and is pressed against a brake disc for deceleration of a moving part, such as an axle of a motor vehicle. The brake pad should be aligned with the caliper and held in place thereon, for example when the brake is not currently operated. Further, the brake pad mounting usually requires some compensation for thermal extension, for example by being mounted in a floating manner.

ES 1 246 760 U describes a disc brake for vehicles, comprising brake pads that are arranged to press against the faces of a brake disc. The brake pads are held freely with axial movement by means of a retainer. The brake pads have a protrusion on a side opposite from the brake lining. The brake pad rests with a radial inner side of the protrusion on a clamping caliper.

### Summary of the Invention

A first aspect relates to a backing plate for a brake pad of a disc brake. A disc brake may be a braking system that pushes brake pads against a brake disc for deceleration, for example the deceleration of a wheel of a vehicle. The brake disc may be a circular metal disc, for example rotationally fixed to the wheel. The brake disc may have through holes for weight saving and cooling. The brake pad may be a friction member of the disc brake. For example, during operation of the brake, the brake pad may be pushed against the brake disc. The brake pad may be a wear part of the brake disc. The brake pad may be configured for a mounting to a caliper of the disc brake. The backing plate may be the part of the brake pad to which the brake lining is mounted to. The brake lining may be a consumable surface of the brake pad. For example, the brake lining may be a sintered material. The backing plate may be a metal part. The backing plate may be substantially plate-shaped. The backing plate may be the part of the brake pad configured for mounting on the caliper. The backing plate may be a unitarian one-piece element. The backing plate may be rigid. The backing plate may be solid. The backing plate may have through holes extending from the first side to the second side. For example, the backing plate may have two such through holes. The through holes may be provided for weight reduction, brake lining fixation and alternatively or additionally guidance pins of the caliper that guide the brake pad when actuating the disc brake.

The backing plate has a first side and a second side opposite and parallel to the first side. For example, the first side and the second side may extend in a radial and circumferential direction. The first side and the second side may be planar. The first side and the second side may have a flat surface or may be configured as a flat surface. The first side is configured for mounting to a caliper of the vehicle disc brake. For example, the first side may be resting on a caliper body or a piston of the caliper. The piston or the caliper may be moveable in an axial direction. The radial and, alternatively or additionally, the axial extension may correspond to the axial and radial extension of the brake disc. The brake disc may have a central axis of rotational symmetry that corresponds to its axis of rotation. The axial extension may correspond to an axial movement axis of the piston, the caliper and alternatively or additionally a brake pad movement during disc brake operation. The first side may be facing away from the brake disc. The first and second side may at least partially be axially opposite surfaces of one section of the backing plate.

The second side is configured for fixation of a brake lining of the brake pad. For example, the brake lining may be riveted, glued, directly sintered on, or otherwise fixed to the second side of the backing plate. The second side may be facing towards the brake disc. The second side may extend parallel to the adjacent surface of the brake disc. The complete second side may be covered by the brake lining or an outer edge of the second side may be free of a brake lining cover.

The first side and the second side may be connected by a circumferential side of the backing plate. Means for connection to a retainer of the disc brake may be arranged on the circumferential side. Means for a connection of a spring configured for pressing radially inwards on the backing plate may be arranged on the circumferential side. For example, there may be protrusions and, alternatively or additionally, depressions for a retention of the brake pad in the disc brake or specifically the caliper of the disc brake present on the circumferential side.

The backing plate has a protrusion extending away from the first side. The protrusion may extend in a generally axial direction away from the first side. For example, the protrusion may extend by 4 mm to 6 mm from the first side, for example by 4,5 mm to 5,5 mm. Edges of the protrusion may be sharp or rounded. The protrusion forms a third side of the backing plate and a fourth side of the backing plate opposite the third side. For example, the fourth side may be radially outward of the third side. The third side may form an underside of the protrusion and the fourth side an upper side of the protrusion. The third side and the fourth side of the backing plate may also be considered as sides of the protrusion. The third side is configured for resting against the caliper of the vehicle disc brake. For example, the third side may rest on a radially outward facing surface of the caliper. For example, the third side may form an end stop that prevents the brake pad from falling out of the caliper. The third side may also prevent the brake pad from slipping too far radially inwards. The third side may help in correctly centering and, additionally or alternatively, mounting the brake pad on the caliper.

The fourth side of the backing plate is angled towards the third side in a direction away from the first side. The fourth side may be angled towards a central axis of the brake disc. The protrusion may thus taper towards its free end. For example, a radial extension of the protrusion may shrink with an increase in distance from the first side. In other words: a height of the protrusion may taper towards its free end. Correspondingly, the protrusion may thus taper to a wider base that is forming a connection to the rest of the backing plate. The base may connect the protrusion to the first side or may be adjacent to the first side. The wider base may harden the protrusion against deformation. Unwanted deformation or failure of the protrusion may thus be avoided. Further, the smaller free end of the protrusion may allow for a more rigid caliper. For example, a recess configured for receiving the protrusion may have a smaller radial extension at its bottom. The brake pad may also be pushed radially inwards with a larger force due to the protrusion geometry, thus keeping the brake pad more securely in place. An end face of the protrusion may have a smaller area than the base.

Each of the above-mentioned sides and also any of the subsequently numbered sides may be configured as flat surfaces. Such a configuration may be easy to manufacture. However, the fourth side may also be curved, for example forming a concave or convex surface. Such a configuration of the fourth side may allow for higher loads without deformation. The third side may be curved, for example in a circumferential direction. Such a configuration may allow the use of a caliper with a uniform thickness and, alternatively or additionally, uniform radial extension along a circumferential direction. The third side may be configured with a shape corresponding to a shape of a surface of the caliper on which the third side rests.

According to an embodiment of the backing plate, the fourth side extends by an angle of 5 degrees to 45 degrees with respect to an axis extending perpendicular from the first side. For example, the fourth side may extend by an angle of 7 degrees to 35 degrees or 10 degrees to 25 degrees with respect to an axis extending perpendicular from the first side. Such angles may result in a stiff protrusion and compact disc brake. The axis extending perpendicular from the first side may correspond to the axial direction and thus also to the axis of rotation of the brake disc when the brake pad is mounted in the disc brake.

The third side may extend parallel with respect to the axis extending perpendicular from the first side. The third side may extend perpendicular from the second side. Such an extension may facilitate the mounting of the brake pad and a manufacturing of the disc brake.

According to an embodiment of the backing plate, the third side and the fourth side each have a first end adjacent the first side and a second end opposite to the first end. The first ends may connect the third side and the fourth side to the rest of the backing plate. The second ends may form free ends of the protrusion and connect the third side and the fourth side to a free end surface. The free end surface of the protrusion may extend parallel to the first side. The second end of the third side and the second end of the fourth side are connected by a fifth side. The fifth side may form the free end surface of the protrusion. The fifth side may extend in the radial and circumferential direction. The fifth side extends parallel to the first side. Such a configuration may be easy to manufacture. The fifth side may extend between the third side and the fourth side. The fifth side may form a part of the protrusion. The fifth side may have a smaller radial extension than the radial distance between the first end of the third side and the first end of the fourth side. The fifth side may have a smaller area than the base of the protrusion.

According to an embodiment of the backing plate, the backing plate has a sixth side connecting the third side with the first side. The sixth side may be recessed with respect to the first side. Such a recessed sixth side may facilitate manufacturing, for example in a stamping process, and the mounting, for example by compensating for manufacturing tolerances in the orientation and additionally or alternatively flatness of the first side and the third side. The sixth side may at least be arranged radially inward of the protrusion between the protrusion and the first side. The sixth side may be parallel to the first side. The sixth side may also connect the fourth side with the first side. The sixth side may connect the base of the protrusion with the first side. The sixth side may surround the protrusion. The first side and the protrusion may thus be spaced apart by the sixth side. The sixth may connect outer surfaces of the protrusion to the first side. The sixth surface may be recessed in the axial direction. For example, the sixth surface may be closer to the second side than the first side.

According to an embodiment of the backing plate, the sixth side is recessed with respect to the first side by at least a length of a radius between the sixth side and the third side. Such a configuration may ensure that the backing plate smoothly abuts with the first side to the caliper and is not tilted by a radius between the sixth side and the third side that is contacting the caliper.

Such a radius may be necessary due to manufacturing and may also reduce a crack risk in the backing plate. For example, the radius may be 0,01 mm, 0,02 mm, 0,05 mm, 0,1 mm or 0,2 mm. Correspondingly, a depth of the sixth surfaces versus the first side may be at least 0,01 mm, 0,02 mm, 0,05 mm, 0,1 mm, 0,2 mm, or 0,5 mm. For example, the sixth surface may be recessed with respect to the first side by no more than 0,2 mm, 0,5 mm, 1 mm, or 2 mm.

According to an embodiment of the backing plate, the protrusion has been formed by a stamping process. The backing plate may be very cost-effective to manufacture with a stamping process. For example, the backing plate may be formed from a flat metal sheet. The whole backing plate may be formed in a stamping process. The plate may be punched from the metal sheet with a tool. Simultaneously, the protrusion may be formed by an insert or protrusion in the stamping tool. The sixth side may also be formed, for example due to the tool supporting the metal plate during protrusion forming. The protrusion may also be formed prior or after punching a backing-plate or backing plate precursor out of the metal sheet. The protrusion and, additionally or alternatively, the sixth side may be formed in a deep drawing step.

Alternatively, the backing plate may for example be produced by a milling process. For example, the backing plate may be milled from a solid block of metal. Milling may allow manufacturing of a very thick backing plate. Further, the backing plate may be more resilient due to the lack of internal stress usually introduced by deformation processes.

According to an embodiment of the backing plate, the backing plate has a recess at the second side, which may be corresponding to the protrusion. Such a backing plate may be very lightweight. Such a backing plate may be easy to manufacture in a stamping process from a flat metal sheet. For example, the backing plate may have a generally uniform thickness. A thickness of the backing plate may be between 8 mm and 10 mm, for example between 8,5 mm and 9,5 mm. Such a recess may facilitate brake lining fixation. For example, the recess may extend towards the first side. A bottom of the recess may correspond to the fifth side and may be an opposite side of a wall forming the fifth side. A wall of the recess may correspond to the third side and may be an opposite side of a wall forming the third side. Another wall of the recess may correspond to the fourth side and may be an opposite side of a wall forming the fourth side.

A second aspect relates to a brake pad for the disc brake. The brake pad comprises the backing plate according to the first aspect. Embodiments, examples and features of the first aspect constitute embodiments, examples and features of the second aspect and vice-versa. The brake pad also comprises a brake lining fixed to the second side of the backing plate. The brake pad may also comprise means for detecting wear of the brake lining, such as a sensor, markings or an electrical wire embedded in the brake lining.

A third aspect relates to a disc brake for a vehicle. The disc brake can be configured, for example, for hydraulic or pneumatic actuation. The vehicle may be a car, a truck, or a trailer. The disc brake comprises a brake pad according to the second aspect or at least comprise a backing plate according to the first aspect. Embodiments, examples and features of the first and second aspect constitute embodiments, examples and features of the third aspect and vice-versa. The disc brake comprises a brake disc, for example a ceramic or metallic brake disc. The disc brake comprises a caliper. The caliper may have a first brake pad mounting side and a second brake pad mounting side, for example extending orthogonally to each other. The brake pad may be mounted to the first side of the backing plate on the first brake pad mounting side of the caliper. For example, the first side may be resting on the first brake pad mounting side or may be attached to the caliper. The brake pad may be mounted to the third side of the backing plate on the second brake pad mounting side of the caliper. For example, the third side may be resting on the second brake pad mounting side, optionally while being pressed by a spring or other biasing means against the second brake pad mounting side. The brake pad mounting sides may be configured as resting sides.

The first brake pad mounting side may, for example, be formed by a body part, piston, or some other brake pad actuating element of the caliper, such as a lever. The second brake bad mounting side may, for example, be formed by a body part of the caliper. The disc brake may comprise parts for moving the brake pad and additionally or alternatively the part the brake pad is mounted to, such as a piston or lever. The body part of the caliper may also be moveable. Movement may, for example, be axially towards the brake disc when the brake is operated. The disc brake may be configured to press the brake pad against the brake disc when operating the disc brake. The disc brake may comprise two brake pads, for example pressing against the brake disc from opposite sides when operating the brake. The two brake pads may be identical or may have different backing plates. For example, a second brake pad of the disc brake may only have two parallel sides without the protrusion extending axially. The first brake pad mounting side may, for example, be a flat surface. The second brake pad mounting side may, for example, be a flat surface. A shape of the first brake pad mounting side may, for example, correspond to a shape of the first side of the backing plate. A shape of the second brake pad mounting side may, for example, correspond to a shape of the third side of the backing plate.

According to an embodiment of the backing plate, the first brake pad mounting side extends in the radial direction and additionally or alternatively in the circumferential direction. The first brake pad mounting side may extend parallel to the first side of the backing plate when the brake pad is mounted in the disc brake. The second brake pad mounting side may extend in the axial direction. Additionally or alternatively, the second brake pad mounting side may extend tangentially to a circumferential direction, for example if configured as a flat surface. Alternatively, the second brake pad mounting side may extend circumferentially, for example if being a curved surface. The protrusion may generally extend axially from the first side and away from the brake disc.

### Brief Description of Figures

Fig. 1 shows a backing plate for a brake pad of a disc brake in a schematic perspective view.
Fig. 2 shows details of the backing plate of Fig. 1 in a schematic perspective view.
Fig. 3 shows details of the backing plate of Fig. 1 in a schematic side view.

### Detailed Description of Embodiments

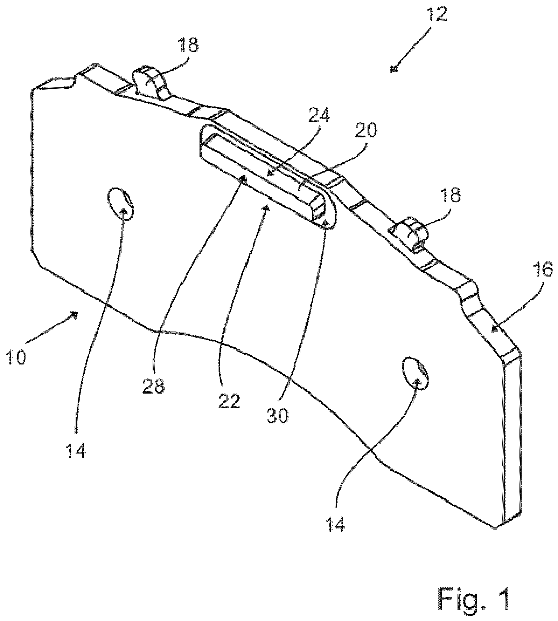

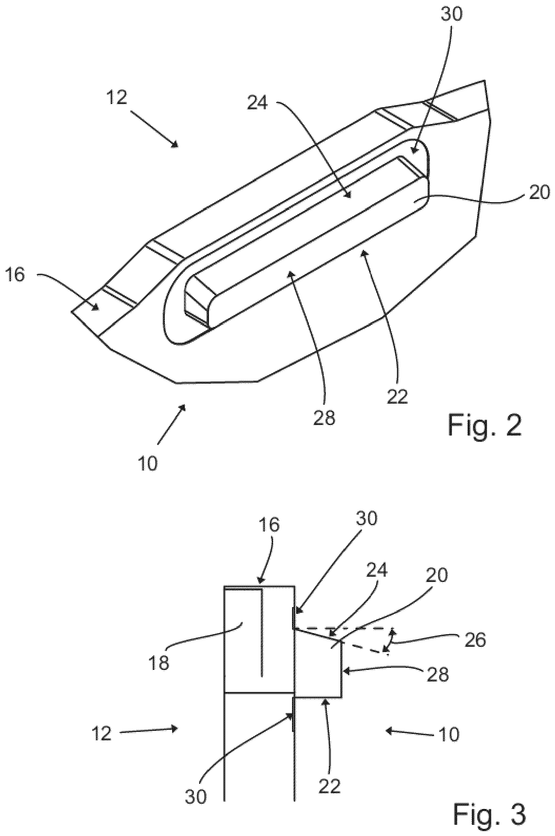

The Figs. 1 to 3 show a brake pad for a disc brake. The backing plate has been manufactured from a metal sheet in a stamping process. The backing plate has a first side 10 and a second side 12 opposite and parallel to the first side 10. Each side 10, 12 is configured as a flat surface. The first side 10 is configured for being mounted on a caliper of the vehicle disc brake. The second side 12 is configured for fixation of a brake lining of the brake pad and facing away from the viewer in Figs. 1 and 2. The first side 10 and the second side 12 extend in a radial and circumferential direction when the brake pad is mounted in the disc brake. The second side 12 is facing towards and extending generally parallel to the brake disc when the brake pad is mounted in the disc brake. Two through holes 14 extend from the first side 10 to the second side in an axial direction through the backing plate. The through holes 14 are configured for receiving guiding pins of the disc brake and are closed at the second side 12 by the brake lining. A circumferential side 16 extends between the first side 10 and the second side 12. The circumferential side 16 extends in the axial direction and forms an outer edge of the brake pad. At an upper end of the backing plate, the backing plate has two hook-shaped protrusions 18 protruding from the circumferential side 16. The hook shaped protrusions 18 are configured for an attachment of a biasing device, such as a spring element, that presses the backing plate and thus the brake pad radially inwards against its seat.

The backing plate has a protrusion 20 extending away from the first side 10. The protrusion 20 extends away from the brake disc and towards the caliper when the brake pad is mounted in the disc brake. The protrusion 20 forms a third side 22 of the backing plate and a fourth side 24 of the backing plate opposite the third side 22, whose orientation can best be seen in Fig. 3. The third side 22 is configured for resting against the caliper of the vehicle disc brake and extends orthogonally from the first side 10. The third side 22 is pressed onto the caliper by the biasing device and thus forms a surface with which the brake pad is seated in the disc brake. The fourth side 24 is angled towards the third side 22 in a direction away from the first side 10. An angle is indicated in Fig. 3 with arrow 26, which is 15° in the shown example. The protrusion 20 thus tapers towards its free end. A radial extension of the protrusion 20, which may be considered as its height, thus reduces in an axial direction away from the first side 10. The base of the protrusion 20, which forms the connection between the protrusion 20 and the rest of the backing plate thus as a larger footprint than a surface area of a fifth side 28. The protrusion 20 may thus withstand higher loads than a protrusion with a constant cross-section and non-angled fourth side. The fifth side 28 extends parallel to the first side 10.

The backing plate has a sixth side 30 connecting the third side 22 and the fourth side 24 with the first side 10. The sixth side 30 surrounds a base of the protrusion 20 and forms a connection with the first side 10. The sixth side 30 is recessed with respect to the first side 10 and thus closer to the second side 12 than the first side 10. The sixth side 30 is recessed with respect to the first side 10 by at least a length of a radius between the sixth side 30 and the third side 22. In the presently shown example, the sixth side 30 is recessed by 0,2 mm in the axial direction with respect to the first side 10. The sixth side 30 extends parallel to the first side 10.

The protrusion 20 is formed by deforming the metal sheet during the stamping process. Accordingly, the backing plate has a recess at the second side 12 corresponding to the protrusion 20. The recess has a bottom side that forms a backside of the wall forming the fifth side 28.

A radial extension of the fifth side 28 is 6 mm in the shown example. An axial extension of the protrusion 20 is 5 mm in the shown example. An axial thickness of the backing plate and thus a distance between the first side 10 and the second side 12 is 9 mm in the shown example. An extension of the protrusion in a direction tangential to the circumferential direction is 50 mm in the shown example. The sixth side 30 has a width of 10 mm below the third side 22 in the shown example and a smaller width above the fourth side 24 so that a width of with regard to an axial projection of the fifth side 28 is constant. In another embodiment, the sixth side 30 may have a constant width of 10 mm.

### Reference Signs

- 10: first side
- 12: second side
- 14: through hole
- 16: circumferential side
- 18: hook shaped protrusions
- 20: protrusion
- 22: third side
- 24: fourth side
- 26: arrow / angle
- 28: fifth side
- 30: sixth side

## Claims

1. Backing plate for a brake pad of a disc brake, wherein the backing plate has a first side (10) and a second side (12) opposite and parallel to the first side (10), wherein the first side (10) is configured for mounting to a caliper of the vehicle disc brake,
wherein the second side (10) is configured for fixation of a brake lining of the brake pad, wherein the backing plate has a protrusion (20) extending away from the first side (10), wherein the protrusion (20) forms a third side (22) of the backing plate and a fourth side (24) of the backing plate opposite the third side (22), wherein the third side (22) is configured for resting against the caliper of the vehicle disc brake, and wherein the fourth side (24) is angled towards the third side (22) in a direction away from the first side (10).

2. Backing plate according to claim 1, **characterized in that** the fourth side (24) extends by an angle (26) of 5 degrees to 45 degrees with respect to an axis extending perpendicular from the first side (10).

3. Backing plate according to claim 1 or 2, **characterized in that** the third side (22) and the fourth side (24) each have a first end adjacent the first side (10) and a second end opposite to the first end, wherein the second end of the third side (22) and the second end of the fourth side (24) are connected by a fifth side (28), wherein the fifth side (28) extends parallel to the first side (10).

4. Backing plate according any one of the preceding claims, **characterized in that** the backing plate has a sixth side (30) connecting the third side (22) with the first side (10), wherein the sixth side (30) is recessed with respect to the first side (10).

5. Backing plate according to claim 4, **characterized in that** the sixth side (30) is recessed with respect to the first side (10) by at least a length of a radius between the sixth side (30) and the third side (22).

6. Backing plate according any one of the preceding claims, **characterized in that** the protrusion (20) has been formed by a stamping process.

7. Backing plate according any one of the preceding claims, **characterized in that** the backing plate has a recess at the second side (10) corresponding to the protrusion (20).

8. Brake pad for a disc brake comprising a backing plate according to any one of the preceding claims and a brake lining fixed to the second side (10) of the backing plate.

9. Disc brake for a vehicle, the disc brake comprising a brake pad according to claim 8, a brake disc and a caliper with a first brake pad mounting side and a second brake pad mounting side, wherein the brake pad is mounted to the first side (10) of the backing plate on the first brake pad mounting side of the caliper, and wherein the brake pad is mounted to the third side (22) of the backing plate on the second brake pad mounting side of the caliper.

10. Disc brake according to claim 9, **characterized in that** the first brake pad mounting side extends in a radial direction and the second brake pad mounting side extends in an axial direction.
